## Europäisches Patentamt

## European Patent Office

## Office européen des brevets

(11) Publication number: **0 411 779 A1**

# EUROPEAN PATENT APPLICATION

(21) Application number: 90307698.2

(22) Date of filing: 13.07.90

(51) Int. Cl.⁵: **G07F 7/08**, G09F 3/00, G07D 7/00

(30) Priority: 24.07.89 JP 190957/89

(43) Date of publication of application:
06.02.91 Bulletin 91/06

(84) Designated Contracting States:
CH DE FR GB IT LI

(71) Applicant: **KYUUBE KABUSHIKI KAISHA**
**8-11, Hishiya-Nishi 4-Chome**
**Higashi-Osaka City, Osaka Pref.(JP)**

(72) Inventor: **Shingu, Shuuichi, c/o Eko Fukuso**
**Kabushiki Kaisha**
**8-11 Hishiya-Nishi 4-chome**
**Higashi-Osaka City, Osaka Pref.(JP)**

(74) Representative: **Boydell, John Christopher et**
**al**
**Stevens, Hewlett & Perkins 5 Quality Court**
**Chancery Laneane**
**London, WC2A 1HZ(GB)**

(54) Guarantee system for high-value articles such as objects of art.

(57) The present invention provides a system for guaranteeing the genuineness of high-value merchandise such as objects of art, wherein each such article is registered in a host computer which is designed to issue upon such registration a magnetic card, for example, bearing certain specific matters of such article and, when necessary, the article and the magetic card are collated with the registered information in the host computer through a computer terminal designed to respond to said magnetic card so as to check whether or not the article is registered and whether or not it is exactly the same one that was registered.

EP 0 411 779 A1

## GUARANTEE SYSTEM FOR HIGH-VALUE ARTICLES SUCH AS OBJECTS OF ART

The present invention relates to a system for guaranteeing the genuineness of high-value merchandise such as objects of art. More particularly, it relates to such system wherein each article is registered in a host computer designed to issue, for example, a magnetic card upon such registration and, as and when necessary, the article and the magnetic card are collated with the registered information put out by a computer terminal responding to said magnetic card to ascertain whether the article is genuine or not.

Heretofore, when high-value articles are offered for sale, they are normally provided with a guarantee certificate or an appraiser's certificate bearing the place of origin or production, background information and the names of the producer and/or deviser and/or dealer as well as the article name and the article number. A prospective buyer would normally check up the article with such certificate attached thereto and buy it only after being convinced of and satisfied with its genuineness.

However, in cases where there is any dishonest or fraudulent merchant involved in the distribution of such articles, bogus merchandise and/or bogus certificate of guarantee or appraisal are put in circulation with the result that an ordinary purchaser can not ascertain the genuineness of an article. Particularly, in the case of direct marketing such as home-visit sale, ordinary people tend to run the risk of buying bogus merchandise.

In the transactions of high-value merchandise such as mentioned above, therefore, there has been the particular need and desire for a method by which one can ascertain the genuineness of such merchandise with certain objective information through the precise collation of subject article and the relative guarantee or appraisal certificate.

It is, therefore, the object of the present invention to overcome the above problems.

According to the present invention, there is provided a guarantee system for such high-value merchandise by visibly indicating the name, configuration and other specifiable disclosure matters of subject article on a small pocket-size data memory device like, for example, a magnetic card, then inputting the assigned secret code number of the article to the data memory device in such manner as to be collated with the registered information in a host computer through an identification device ( a computer terminal) which is installed at the store counter or the like location and linked to the host computer, and actuating the host computer by the insertion of the data memory device in the store counter terminal to output the pertinent registered information on the subject article to the display part of the terminal so that one may compare the article with the registered information in the host computer to check whether the article is registered or not and also whether the article is exactly the same one that was registered or not.

### BRIEF DESCRIPTION OF THE DRAWINGS

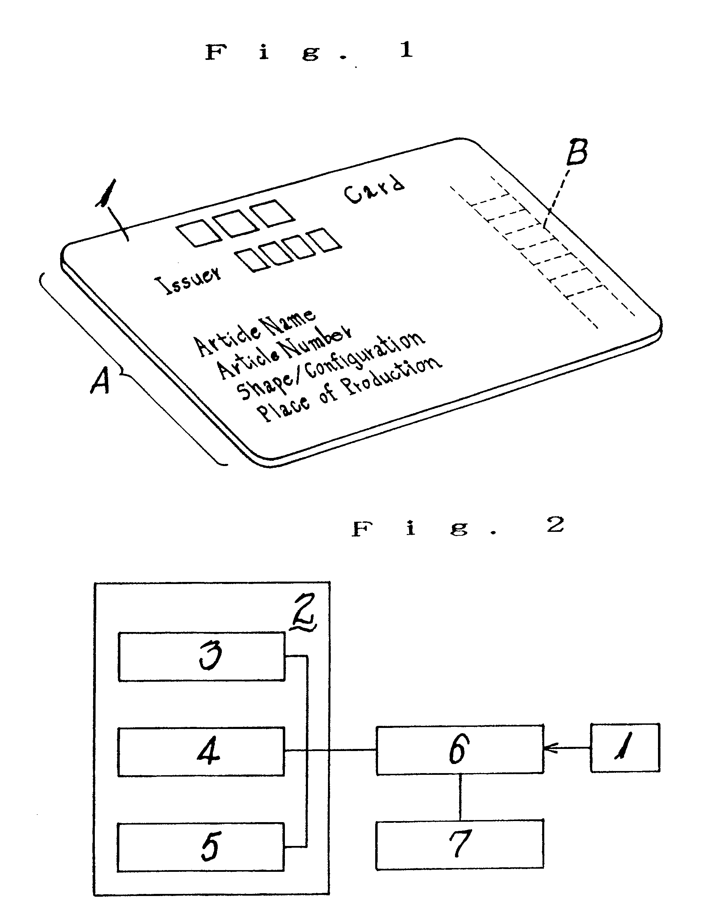

Fig. 1 shows a perspective view of a data memory device (a magnetic card) employed in the present invention,

Fig. 2 shows schematically a block view to indicate the composition of an embodiment of the present invention, and

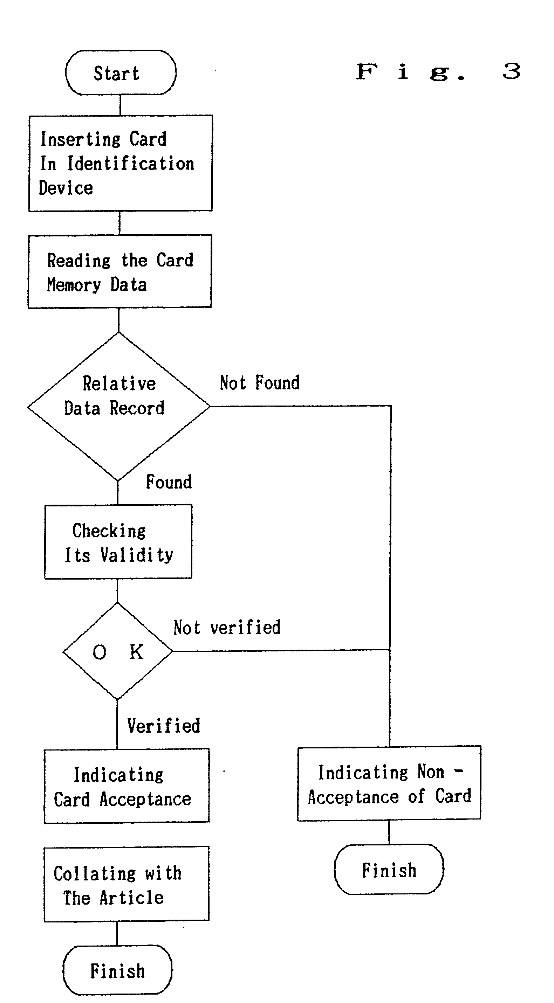

Fig. 3 shows a flow chart to indicate the operational sequence of the embodiment in Fig. 2.

In the drawings, the numeral 1 indicates a data memory device, the letters A and B indicating disclosure information and a secret code number, respectively, the numeral 2 indicating a host computer, the numeral 3 indicating its memory part, the numeral 4 indicating its imprinting part, the numeral 5 indicating its collating part, and the numeral 6 indicating an identification device and the numeral 7 indicating its display part.

The present invention will be hereinafter described with reference to the accompanying drawings.

First of all, before an article is placed in the distribution channel, all information specific to the article, such as the name (number) of the article, its shape or configuration, its photograph, its place of production and, if necessary, its background, the names of its manufacturer and dealer, the name of an appraiser who appraised it to be a genuine article, the registration number of the article, are input in the memory part 3 of a host computer (a master registration or recording device) 2 as the disclosure information A, together with a secret code number B specifically assigned to said article. Then, the host computer 2 is instructed to issue a small pocket-size data memory device 1 such as a magnetic card or an IC card after imprinting or embossing the abovementioned disclosure information A thereon by means of the imprinting device 4 of the computer 2.

This data memory device 1 issued is always attached to the relative article so as to be readily shown if needed, along with a certificate of guarantee or appraisal. When the article is transacted, it is first checked against the data memory device 1 whereby one can find out visually by the disclosure information A indicated thereon whether or not it is identical to that disclosed therein, and then, the memory device 1 is fitted or inserted in the terminal 6 of the host computer 2, which is installed in the store counter or being hand-carried, whereupon the data contents in the memory device 1 are read out and, by means of the secret code number B, referred to the collation part 5 of the host computer 2 so that one can find out whether or not the contents read out are registered in the memory part 3 of the host computer 2 and, simultaneously, the computer 2 checks the validity of the memory device or card 1, confirms its acceptance and outputs the registered data of the subject article in the computer memory part 3 into the display part 7 of the identification terminal 6.

As described, in transacting the subject article, its genuineness can be identified and guaranteed by means of the collation of three elements, that is, the actual article, the disclosure information visibly imprinted or inscribed on the small portable information memory device substituting a warranty or appraisal certificate, and the registered information data output to the display part of the identification terminal by the host computer. It is not particularly necessary to show the secrete code number B to the user of the present system but it is more desirable to hold it as confidential information between the memory device 1 and the host computer 2. It is also possible, if necessity arises, to make any addition, correction and revision to the disclosure information freely as desired.

The effects of the present invention are as follows:

According to the system of the present invention as described above, all information specifiable with a particular article are registered with a computer on one hand and an information memory means with the relative data memory is issued in substitution for a guarantee or appraisal certificate pertaining to the article on the other so as to identify the article and ascertain its genuineness by collating these data with each other.

Since this information memory means such as a magnetic card, IC card, is made available for only authentic and genuine articles, the present system can prevent the manufacture or the exercise of any false guarantee or appraisal certificate. Also, since the memory card means memorizes a secret code number which can be read out by the host computer, any false card can be spotted or identified instantly when it is used with this system. Another advantage of the present system is that, since one can find out whether the article is registered with the host computer or not only through the use of a genuine card, the collation between the card and the relative article can be confirmed from another angle.

Therefore, the present invention has the effect of preventing the circulation of bogus merchandise, bogus guarantee certificate and bogus appraisal certificate, thus contributing to the promotion of distribution of genuine high-value merchandise.

## Claims

1. A system for guaranteeing the genuineness of high-value articles such as objects of art, comprising the steps of visibly indicating the name, configuration and other specific disclosure matters of an article on a small pocket-sized information memory means, inputting a certain secret code number assigned to said article into said information memory means in a collatable manner, collating said memory means with a host computer through an identification device installed at the store counter or the like location, and actuating said host computer to output the data previously registered therein on said article to the display part of said identification device so as to permit the collation of three elements, namely, said actual article, said information memory means and said registered data in said host computer, thereby confirming that said article is exactly the same one that was registered.

2. The guarantee system for high-value articles such as objects of art as described in Claim 1, wherein said small pocket-sized information memory means takes the form of magnetic card or IC card.

Fig. 1

Fig. 2

4

F i g. 3

```
        ┌─────────────┐
        (    Start    )
        └──────┬──────┘
        ┌──────┴──────────┐
        │ Inserting Card   │
        │ In Identification│
        │ Device           │
        └──────┬──────────┘
        ┌──────┴──────────┐
        │ Reading the Card │
        │ Memory Data      │
        └──────┬──────────┘
              ◇ Relative
              Data Record ──── Not Found ──────┐
                │ Found                          │
        ┌───────┴──────┐                        │
        │ Checking      │                        │
        │ Its Validity  │                        │
        └───────┬──────┘                        │
               ◇ O K ──── Not verified ─────────┤
                │ Verified                       │
        ┌───────┴──────┐          ┌─────────────┴──────┐
        │ Indicating    │          │ Indicating Non -    │
        │ Card Acceptance│         │ Acceptance of Card  │
        └───────┬──────┘          └─────────┬──────────┘
        ┌───────┴──────┐              ┌──────┴──────┐
        │ Collating with│             (   Finish    )
        │ The Article   │             └─────────────┘
        └───────┬──────┘
          (   Finish    )
```

5

European
Patent Office

**EUROPEAN SEARCH
REPORT**

Application Number

**EP 90 30 7698**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 192 569   (J-A DESPRES)<br>* abstract; claims ; figures * * page 3, line 29 - page 6, line 20 *<br>— — — | 1,2 | G 07 F 7/08<br>G 07 D 7/00<br>G 09 F 3/00 |
| Y | EP-A-0 256 196   (ARTIKA INTERNATIONAL)<br>* abstract; claim 1; figures *<br>— — — | 1,2 | |
| A | WO-A-8 200 062   (LIGHT SIGNATURES)<br>* abstract; figure 1 * * page 3, line 11 - page 11, line 8 *<br>— — — | 1 | |
| A | EP-A-0 042 361   (GRETAG)<br>* abstract; figures * * page 15, lines 7 - 18 *<br>— — — | 1,2 | |
| A | EP-A-0 161 181   (SEREL)<br>— — — | | |
| A | WO-A-8 403 019   (LIGHT SIGNATURES)<br>— — — — — | | |

| TECHNICAL FIELDS SEARCHED (Int. Cl.5) |
|---|
| G 07 F<br>G 06 K<br>G 01 N<br>G 09 F<br>G 07 D |

The present search report has been drawn up for all claims

| Place of search | Date of completion of search | Examiner |
|---|---|---|
| The Hague | 10 December 90 | DAVID J.Y.H. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

& : member of the same patent family, corresponding
    document